# EUROPÄISCHE PATENTANMELDUNG

(11) **EP 3 874 949 A1**
(43) Veröffentlichungstag der Anmeldung: **08.09.2021**
(21) Anmeldenummer: 21000054.3
(22) Anmeldetag: 22.02.2021
(51) Int. Cl.: A01N 31/08, A01N 33/10, A01N 59/00, C11D 3/20, C11D 3/28, C11D 3/34, C11D 3/395, C11D 17/00

(54) **CO-GRANULATE, WASCH- UND REINIGUNGSMITTEL UND DEREN VERWENDUNG**

(30) Priorität: 06.03.2020 DE 102020001458
(71) Anmelder: WeylChem Performance Products GmbH, 65203 Wiesbaden (DE)
(72) Erfinder: Morschhäuser, Roman, 55122 Mainz (DE); Preuschen, Judith, 55270 Sörgenloch (DE); Kuhse, Bo, 65195 Wiesbaden (DE); Ludwig, Rolf, 65817 Eppstein (DE)
(74) Vertreter: Ackermann, Joachim

(57) **Zusammenfassung**

Beschrieben werden mit Celluloseether beschichtete Co-Granulate enthaltend
b1) cyclisches Sulfonimin,
b2) Bleichaktivator ausgewählt aus der Gruppe bestehend aus Tetraacetylethylendiamin, Decanoyloxybenzoesäure oder Mischungen davon, und
b3) Celluloseether als Bindemittel.

Diese Co-Granulate können durch Nassgranulierung hergestellt werden und sind sehr gut lagerfähig.

Die Co-Granulate können in Wasch- und Reinigungsmitteln eingesetzt werden, welche
a) Bleichmittel ausgewählt aus der Gruppe bestehend aus Perborat, Percarbonat oder Mischungen davon, und
b) die mit Celluloseether beschichteten Co-Granulate enthalten.

Diese Wasch- und Reinigungsmittel enthalten hochaktive Bleichaktivatoren und Bleichkatalysatoren und zeichnen sich durch eine hohe Lagerstabilität aus. Die Kombination von Komponenten b1) und b2) und Persauerstoffverbindung a) führt auch bei tiefen Temperaturen zu einer ausgeprägten Desinfektionswirkung.

Die Wasch- und Reinigungsmittel lassen sich auch bei niedrigen Temperaturen einsetzen und zeigen eine gute Waschleistung.

## Beschreibung

Die vorliegende Erfindung betrifft Co-Granulate, Wasch- und Reinigungsmittel für Textilien und Oberflächen sowie ein Verfahren zum Reinigen von Textilien und Oberflächen.

Um eine Bleichwirkung zu erreichen, werden Wasch- und Reinigungsmitteln Persalze wie Perborate und Percarbonate zugesetzt. Zur Aktivierung dieser Bleichmittel und um beim Reinigen bei Temperaturen von 60 °C und darunter eine zufriedenstellende Bleichwirkung zu erreichen, enthalten diese Mittel in der Regel weiterhin Bleichaktivatoren oder Bleichkatalysatoren.

Bleichaktivatoren und Bleichkatalysatoren werden den Wasch- und Reinigungsmitteln vorzugsweise in Form vorgefertigter Granulate eingesetzt. Dies geschieht zum einen, um ihre Lagerstabilität zu erhöhen, zum anderen aber auch, um eine homogene Einarbeitung winziger Katalysatormengen in die Formulierungen zu gewährleisten.

Sulfonimine und deren Einsatz in Wasch- und Reinigungsmitteln sind bereits in der Patentliteratur beschrieben worden.

Die DE 691 04 405 T2 entsprechend EP 0 453 003 B1 offenbart BleichmittelZusammensetzungen für Waschmittel, die 1 bis 60 Gew. % einer Persauerstoffverbindung, 0,05 bis 10 Gew. % eines ausgewählten Sulfonimins und 0,5 bis 50 Gew. % eines Tensids enthalten.

In der DE 691 04 751 T2 entsprechend EP 0 446 982 B1 werden BleichmittelZusammensetzungen beschrieben, die 1 bis 60 Gew. % einer Persauerstoffverbindung, 0,05 bis 10 Gew. % eines ausgewählten Sulfonimins und 0,1 bis 40 Gew. % eines mit dem Peroxidanion reagierenden Bleichvorläufers enthalten. Aus dieser Schrift sind Bleichmittelzusammensetzungen bekannt, die bereits bei niedrigen Temperaturen wirken. In den Beispielen werden Kombinationen von Sulfonimin mit dem Bleichaktivator Tetraacetylethylendiamin (TAED) und Perborat und deren Wirkung auf mit Teeflecken präparierte Textilien beschrieben. Die Einwirkung des Bleichmittels erfolgt bei Temperaturen von 40°C.

Im SOFW-Journal 140 9-2014 werden von G. Reinhardt, M. Best, I. Herrgen und M. Ladwig Sulfonimine und quaternäre Iminiumsalze als neuartige Bleichkatalysatoren beschrieben. Diese Verbindungen dienen als Vorläufer von Dioxiranen, Oxaziridinen und Oxaziridiniumsalzen, welche bereits in niedrigen Konzentrationen in Kombination mit Perverbindungen eine ausgezeichnete Bleichwirkung erzielen. In dieser Veröffentlichung ist bereits vorgeschlagen worden, Sulfonimine und quaternäre Iminiumsalze in der Form von Granulaten mit weiteren Bleichaktivatoren, wie TAED oder Nonanoyloxybenzolsulfonat-Natrium (NOBS), einzusetzen und dabei auch filmbildende Bindemittel zu verwenden. Derartige Granulate sind aber häufig nicht ausreichend lagerstabil.

EP 3,345,989 A1 offenbart Granulate, die Sulfonimine oder quaternäre Iminiumsalze und eine bei 25 °C feste Säure als Stabilisator enthalten. Diese Granulate lassen sich zur Formulierung von Wasch- und Reinigungsmitteln einsetzen, welche sich bereits bei Temperaturen unterhalb von 35 °C einsetzen lassen.

Durch die Tendenz zur Reduktion der durchschnittlichen Waschtemperaturen bedingt, kommt es zu einer verminderten Bleichleistung von Waschmitteln. Damit einher geht eine Verschlechterung der antimikrobiellen Wirkung dieser Produkte. Es ist bekannt, dass TAED zusammen mit Percarbonat oberhalb von 40°C eine sehr gute antimikrobielle Wirkung zeigt. Diese geht allerdings bei tieferen Temperaturen sehr deutlich zurück. Dies kann bei Temperaturen unterhalb von 30°C in Waschmaschinen zu einer bedenklichen Keimbelastung führen, was den Einsatz von Bioziden erforderlich macht.

Überraschenderweise wurde gefunden, dass Co-Granulate enthaltend ausgewähltes Sulfonimin und ausgewählten Bleichaktivator spezielle Bindemittel benötigen, um durch Nassgranulierung hergestellte stabile Co-Granulate zu ergeben. In der EP 3,345,989 A1 wird allgemein die Verwendung von nicht sauren Bindemitteln vorgeschlagen, wobei Celluloseether als Bindemittel nicht ausdrücklich erwähnt sind. In den Beispielen dieses Dokuments wurde mikrokristalline Cellulose eingesetzt, die aber keine Nassgranulierung zulässt. Überraschend wurde gefunden, dass mit Cellulose-ethern als Bindemittel stabile Co-Granulate durch Nassgranulierung erzeugt werden können. Außerdem zeigen sämtliche in EP 3,345,989 A1 beschriebenen Granulate nach der Lagerung einen leichten Gelbstich. Die Co-Granulate der vorliegenden Erfindung zeigen selbst nach längerer Lagerung keine Veränderung des Farbtons.

Darüber hinaus wurde gefunden, dass die Co-Granulate enthaltend ausgewähltes Sulfonimin, ausgewählten Bleichaktivator und spezielles Bindemittel einen Überzug aus ausgewähltem Material benötigen, um ausreichend lagerstabil zu sein und um nicht zur Verfärbung zu neigen. In den Beispielen der EP 3,345,989 A1 werden Beschichtungen aus Celluloseether erwähnt. In der allgemeinen Beschreibung dieses Dokuments werden noch weitere Beschichtungsmittel, beispielsweise Polyvinylalkohol, genannt. Es hat sich herausgestellt, dass Polyvinylalkohol in Kombination mit Celluloseether als Bindemittel nur Granulate mit einer begrenzten Lagerfähigkeit ergibt. Überraschenderweise zeichnen sich die erfindungsgemäßen mit Celluloseethern beschichtete Co-Granulate durch eine sehr hohe Lagerstabilität aus.

Überraschenderweise wurde weiterhin gefunden, dass Co-Granulate enthaltend ausgewählte Sulfonimine und ausgewählte Bleichaktivatoren in Kombination mit ausgewählten Persalzen bereits bei 20°C Peressigsäure freisetzen, die für antimikrobielle Eigenschaften verantwortlich ist. Es wurde gefunden, dass das Sulfonimin den Bleichaktivator und das Persalz benötigt, um über Persäure aktiviert zu werden. Wenn kein oder zu wenig Bleichaktivator vorliegt, dann kann das Sulfonimin nicht aktiviert werden und weder bei 20°C Bleicheffekte hervorrufen noch mikrobiologisch wirksam sein. Im Co-Granulat gelangt also der Bleichaktivator zum Sulfonimin und aktiviert dieses. Das System Sulfonimin, Bleichaktivator und Persalz gewährleistet also eine optimale Hygiene bereits bei niedrigen Temperaturen.

Ausgehend von diesem Stand der Technik lag der vorliegenden Erfindung die Aufgabe zugrunde, über längere Zeit lagerstabile Co-Granulate bereitzustellen, die hochaktive Bleichaktivatoren und Bleichkatalysatoren enthalten, die bei der Lagerung zu keinen Verfärbungen neigen.

Eine weitere Aufgabe der vorliegenden Erfindung bestand in der Bereitstellung von stabilen Co-Granulaten, die hochaktive Bleichaktivatoren und Bleichkatalysatoren enthalten und die nach der Nassgranulierung nicht wieder in ihre Bestandteile zerfallen.

Noch eine weitere Aufgabe der vorliegenden Erfindung bestand in der Bereitstellung von Co-Granulaten, die in Kombination mit ausgewählten Bleichmitteln hervorragende Waschergebnisse bei niedrigen Temperaturen ermöglichen und die eine drastische Reduktion der Zahl von Mikroorganismen auf den behandelten Substraten bewirken.

Gelöst werden diese Aufgaben durch die Bereitstellung von mit Celluloseether beschichtetem Co-Granulat enthaltend
b1) cyclisches Sulfonimin,
b2) Bleichaktivator ausgewählt aus der Gruppe bestehend aus Tetraacetylethylendiamin, Decanoyloxybenzoesäure oder Mischungen davon, und
b3) Celluloseether als Bindemittel.

Darüber hinaus betrifft die Erfindung Wasch- und Reinigungsmittel enthaltend
a) Bleichmittel ausgewählt aus der Gruppe bestehend aus Perborat, Percarbonat oder Mischungen davon, und
b) mit Celluloseether beschichtetes Co-Granulat enthaltend
   b1) cyclisches Sulfonimin,
   b2) Bleichaktivator ausgewählt aus der Gruppe bestehend aus Tetraacetylethylendiamin, Decanoyloxybenzoesäure oder Mischungen davon, und
   b3) Celluloseether als Bindemittel.

Im erfindungsgemäßen Wasch- und Reinigungsmittel werden als Komponente a) ausgewählte Perverbindungen eingesetzt. Dabei handelt es sich um Perborat, Percarbonat oder Mischungen davon.

Bevorzugt werden als Komponente a) die entsprechenden Natriumsalze der Perborate und Percarbonate eingesetzt, insbesondere Natriumpercarbonat.

Die Menge an Komponente a) im erfindungsgemäßen Wasch- und Reinigungsmittel beträgt üblicherweise 5 bis 30 Gew. %, bezogen auf die Gesamtmenge an Wasch-und Reinigungsmittel. Bevorzugte Mengen an Komponente a) bewegen sich im Bereich von 5 bis 20 Gew.-%, insbesondere im Bereich von 8 bis 12 Gew.-%.

Im erfindungsgemäßen Wasch- und Reinigungsmittel werden als Komponente b) Co-Granulate mit ausgewählten Komponenten eingesetzt. Diese Co-Granulate sind mit einer Beschichtung aus Celluloseether umhüllt. Diese Co-Granulate enthalten als Inhaltsstoffe b1) cyclisches Sulfonimin, b2) Bleichaktivator ausgewählt aus der Gruppe bestehend aus Tetraacetylethylendiamin, Decanoyloxybenzoesäure und Mischungen davon, und als Bindemittel b3) Celluloseether.

Die Menge an Komponente b) im erfindungsgemäßen Wasch- und Reinigungsmittel beträgt üblicherweise 0,1 bis 10 Gew. %, bezogen auf die Gesamtmenge an Wasch-und Reinigungsmittel. Bevorzugte Mengen an Komponente b) bewegen sich im Bereich von 0,2 bis 8 Gew.-%, insbesondere von 0,5 bis 6 Gew.,-%, besonders bevorzugt von 0,5 bis 3 Gew.-%, und ganz besonders bevorzugt im Bereich von 0,5 bis 2 Gew.-%.

Bei den erfindungsgemäß als Komponente b1 ) eingesetzten cyclischen Sulfoniminen handelt es sich um cyclische Verbindungen mit einer Struktureinheit =N-SO₂- im Molekül.

Bevorzugt als Komponente b1) eingesetzte cyclische Sulfonimine sind Verbindungen der Formel I 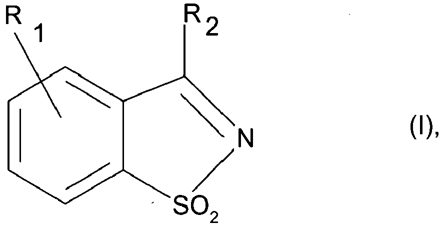 worin R₁ und R₂ unabhängig voneinander Wasserstoff, C₁-C₆-Alkyl oder Phenyl sind.

Von den Verbindungen der Formel I sind solche ganz besonders bevorzugt, worin R₁ Wasserstoff ist und R₂ C₁-C₆-Alkyl, insbesondere Methyl oder Ethyl, oder Phenyl ist.

Äußerst bevorzugtes Sulfonimin der Formel I ist 3-Methyl-1,2-benzisothiazol-1,1-dioxid.

Bedeutet in dieser Beschreibung einer der Reste C₁-C₆-Alkyl, so kann die Alkylgruppe sowohl verzweigt als auch unverzweigt sein. Eine Alkylgruppe enthält ein bis zu sechs Kohlenstoffatome. Beispiele für Alkylgruppen sind: Methyl, Ethyl, n-Propyl, Isopropyl, n-Butyl, sec-Butyl, *tert.-Butyl,* Pentyl oder n-Hexyl.

Die Menge an Komponente b1 ) im erfindungsgemäßen Co-Granulat beträgt üblicherweise 5 bis 50 Gew. %, bezogen auf die Gesamtmenge an umhülltem Co-Granulat. Bevorzugte Mengen an Komponente b1) bewegen sich im Bereich von 15 bis 45 Gew.-%, insbesondere im Bereich von 20 bis 35 Gew.-%.

Als Bleichaktivator b2) wird erfindungsgemäß Tetraacetylethylendiamin oder Decanoyloxybenzoesäure eingesetzt. Es können auch Mischungen davon verwendet werden. Bevorzugte Komponente b2) ist Tetraacetylethylendiamin.

Die Menge an Komponente b2) im erfindungsgemäßen Co-Granulat beträgt üblicherweise 20 bis 75 Gew. %, bezogen auf die Gesamtmenge an umhülltem Co-Granulat. Bevorzugte Mengen an Komponente b2) bewegen sich im Bereich von 40 bis 70 Gew.-%, insbesondere im Bereich von 50 bis 60 Gew.-%.

Als Bindemittel b3) wird erfindungsgemäß ein Celluloseether verwendet. Es können auch Mischungen von Celluloseethern eingesetzt werden.

Bei Celluloseethern handelt es sich um Derivate der Cellulose, die durch partielle oder vollständige Substitution der Wasserstoffatome der Hydroxygruppen in der Cellulose entstehen. Art der Substituenten, Anzahl der substituierten Hydroxygruppen und deren Verteilung in den erfindungsgemäß eingesetzten Celluloseethern können in weiten Bereichen variiert werden. Vorzugsweise werden Celluloseether eingesetzt, die löslich in Wasser sind. Darunter wird eine Löslichkeit von mindestens 1 g Celluloseether in 1 L Wasser von 25 °C verstanden.

Beispiele für Celluloseether, die als Komponente b3) eingesetzt werden können sind Carboxymethylcellulose (CMC), Methylcellulose (MC), Ethylcellulose (EC), Hydroxyethylcellulose (HEC) oder Hydroxypropylcellulose (HPC).

Weitere Beispiele für Celluloseether, die als Komponente b3) eingesetzt werden können sind Cellulose-Mischether, wie Methylethylcellulose (MEC), Hydroxyethylmethylcellulose (HEMC), Hydroxypropylmethylcellulose (HPMC), Ethylhydroxyethylcellulose oder Carboxymethylhydroxyethylcellulose

Bevorzugte Komponente b3) ist Carboxymethylcellulose.

Die Menge an Komponente b3) im erfindungsgemäßen Co-Granulat beträgt üblicherweise 1 bis 10 Gew. %, bezogen auf die Gesamtmenge an umhülltem Co-Granulat. Bevorzugte Mengen an Komponente b3) bewegen sich im Bereich von 2 bis 8 Gew.-%, insbesondere im Bereich von 3 bis 6 Gew.-%.

Die erfindungsgemäßen Co-Granulate können neben den oben beschriebenen Komponenten b1), b2) und b3) noch weitere Inhaltsstoffe als Komponente b4) enthalten. Der Anteil dieser Komponente b4) beträgt üblicherweise 0 bis 20 Gew.-%, vorzugsweise 0 bis 10 Gew.-%, bezogen auf die Gesamtmasse des umhüllten Co-Granulats.

Als weitere Inhaltsstoffe b4) kommen beispielsweise Sikkative, wie Kalziumsulfat, oder weitere Bindemittel, die keine Celluloseether sind, oder saure Bestandteile, in Betracht. Es können auch Kombinationen von mehreren Inhaltsstoffen b4) eingesetzt werden. Deren Gesamtmenge sollte aber 20 Gew.-%, bezogen auf die Gesamtmasse des umhüllten Co-Granulats, nicht überschreiten.

Vorzugsweise enthalten die erfindungsgemäßen Co-Granulate neben den Komponenten b1), b2) und b3) und der Umhüllung keine weiteren Inhaltsstoffe.

Die erfindungsgemäßen Co-Granulate sind mit einer Umhüllung aus Celluloseether (sog. Coating oder Schutzschicht) versehen, wodurch die Lagerstabilität verbessert wird und die Co-Granulate gegebenenfalls eingefärbt werden können. Der Anteil der Umhüllung an der Gesamtmenge der Co-Granulate kann in weiten Bereichen schwanken, sollte aber 30 Gew.-%, bezogen auf die Gesamtmasse des umhüllten Co-Granulats, nicht überschreiten. Vorzugsweise beträgt der Anteil an der Umhüllung 5 bis 20 Gew.-%, bezogen auf die Gesamtmasse des beschichteten Co-Granulats.

Für die Umhüllung können die bei Komponente b3) genannten Celluloseether eingesetzt werden. Als Umhüllung bevorzugt werden Methylcellulose, Carboxymethylcellulose, Hydroxymethylpropylcellulose, Hydroxymethylcellulose, Hydroxypropylcellulose oder Mischungen von zwei oder mehreren davon. Optional kann die Umhüllung zusätzlich geringe Mengen an Additiven, wie wasserlösliche oder wasserunlösliche organische Farbstoffe, und/oder weiteren filmbildenden Polymeren (also filmbildende Polymere, die keine Celluloseether sind) enthalten. Der Gesamtanteil solcher Additive und/oder weiteren filmbildenden Polymeren an der Gesamtmasse der Umhüllung sollte jedoch 10 Gew.-%, vorzugsweise 5 Gew.-%, nicht überschreiten. Vorzugsweise enthält die Umhüllung keine Additive und keine weiteren filmbildenden Polymere.

In einer weiteren Ausführungsform kann das erfindungsgemäße Co-Granulat mit zwei oder mehr Umhüllungen versehen sein, wovon mindestens eine aus Celluloseether besteht. So kann das erfindungsgemäße Co-Granulat mit einer ersten Umhüllung, vorzugsweise aus Hydroxypropylmethylcellulose (HPMC) und/oder aus Methylcellulose (MC), versehen sein und mit einer zweiten Schutzschicht, vorzugsweise aus einer Fettsäure oder einem Fettsäuregemisch, ganz besonders bevorzugt aus Stearinsäure und Palmitinsäure.

Bevorzugt als Umhüllung eingesetztes Material ist Hydroxymethylcellulose.

In Bezug auf ihre Leistungsfähigkeit und ihre Lagerstabilität besonders bevorzugt sind mit 5 bis 20 Gew.-% Hydroxymethylcellulose umhüllte Co-Granulate , die, bezogen auf deren Gesamtgewicht,
b1) 20 bis 35 Gew.-% cyclisches Sulfonimin der Formel (I),
b2) 50 bis 60 Gew.-% Tetraacetylethylendiamin, und
b3) 3 bis 6 Gew.-% Carboxymethylcellulose als Bindemittel.
enthalten

Zur Herstellung der erfindungsgemäßen Co-Granulate sind grundsätzlich verschiedene Granulierverfahren möglich.

Es können Verfahren der Aufbaugranulierung und der Abbaugranulierung zum Einsatz kommen. Unter Abbaugranulierung versteht der Fachmann das Aggregieren von Pulver durch Feuchtigkeit beziehungsweise durch Druck gefolgt von einem Abbau durch Zerteilen auf eine gewünschte Korngröße. Die Abbaugranulierung kann als Feucht- oder Trockengranulierung durchgeführt werden.

Bei der bevorzugt eingesetzten Feuchtgranulierung wird aus den Einzelkomponenten und einer Granulierflüssigkeit eine teigartige, homogene Masse hergestellt, die anschließend in die Granulate zerkleinert wird. Als Granulierflüssigkeiten werden gelöste Klebstoffe verwendet, wobei für die Herstellung der erfindungsgemäßen Co-Granulate Celluloseether in Frage kommen. Die hergestellte Grundmasse wird im Anschluss zu den Co-Granulaten zerkleinert, wobei dem Fachmann bekannte Aggregate eingesetzt werden. Es kann zwischen Lochscheiben-, Press- und Schüttelgranulaten unterschieden werden. Abschließend können die Lösemittel der Granulierflüssigkeiten durch Wärmebehandlung entfernt werden.

Bei der Trockengranulierung werden Co-Granulate durch Kompaktierung eines Pulvers mittels Druckanwendung erzeugt. Dazu können z.B. Walzenkompaktoren eingesetzt werden. Das erzeugte Pressgut wird danach auf die gewünschte Größe weiter verkleinert.

Bei der ebenfalls möglichen Aufbaugranulierung werden die Co-Granulate direkt aus Pulverteilchen hergestellt. Hierzu können beispielsweise Pulverpartikel in einem Luftstrom in einem Wirbelschichter verwirbelt und mit einer Granulierflüssigkeit besprüht werden. Die Pulverpartikel lagern sich zu Agglomeraten zusammen, welche durch den Luftstrom getrocknet werden. Alternativ können Co-Granulate mit Schnellmischern hergestellt werden. Dazu werden zu Verarbeitungsbeginn die Bestandteile des Co-Granulats in Pulverform eingebracht. Während der Verfahrens-dauer wird Granulierflüssigkeit hinzugeführt. Durch die hohen Scherkräfte und die Reibung an der Wand des Schnellmischers entstehen gleichmäßige Co-Granulate.

Von den erzeugten Co-Granulaten können durch Siebung der Feinkornanteil und gegebenenfalls der Grobkornanteil abgetrennt werden. Vorzugsweise wird der Grobkornanteil erneut der Granulierapparatur zugeführt und der Feinkornanteil erneut der Kompaktierung.

Die so erzeugten Co-Granulate werden in einem separaten Schritt mit einer Umhüllung versehen, beispielsweise in einem Wirbelschichtmischer.

Kennzeichnend für die erfindungsgemäßen Co-Granulate ist in erster Linie ihre chemische Zusammensetzung. Gleichwohl hat es sich erwiesen, dass die Wirkung dieser Co-Granulate auch über die Beeinflussung physikalischer Parameter, wie beispielsweise der Teilchengröße, des Feinanteils sowie des Gehalts an Bleichkatalysator und an Bleichaktivator ausgewählter Siebfraktionen vorteilhaft beeinflusst werden kann.

Bevorzugte erfindungsgemäße Co-Granulate weisen aus diesem Grund eine mittlere Teilchengröße zwischen 0,1 und 1,6 mm, vorzugsweise zwischen 0,2 und 1,2 mm und besonders bevorzugt zwischen 0,3 und 1,0 mm auf, jeweils gemessen durch Siebanalyse.

In besonders bevorzugten erfindungsgemäßen Co-Granulaten bewegt sich die volumenmittlere Größe der Primärteilchen im Bereich von 1 µm bis 150 µm, und die fertigen Co-Granulate weisen eine mittlere Teilchengröße zwischen 0,1 und 1,6 mm auf.

Bevorzugte erfindungsgemäße Co-Granulate weisen weiterhin einen Wasseranteil von weniger als 5 Gew.-%, insbesondere von weniger als 2 Gew.-% (gemessen nach Karl Fischer), bezogen auf die Gesamtmenge des Co-Granulats, auf.

Die Co-Granulate werden zur Herstellung der erfindungsgemäßen Wasch- oder Reinigungsmitteln eingesetzt.

Die erfindungsgemäßen Wasch- und Reinigungsmittel können als Granulate, pulver- oder tablettenförmige Feststoffe aber auch in flüssiger oder pastöser Form in pouches und 2-Kammer-Flaschen vorliegen.

Vorzugsweise handelt es sich bei den erfindungsgemäßen Wasch- und Reinigungsmitteln um pulver- oder tablettenförmige Feststoffe, insbesondere um Pulver.

In den erfindungsgemäßen Wasch- und Reinigungsmitteln können zusätzlich zu den Komponenten a) und b) im Prinzip alle bekannten und in derartigen Mitteln üblichen Inhaltsstoffe enthalten sein.

Die erfindungsgemäßen Wasch- und Reinigungsmittel, insbesondere die Mittel für die Reinigung von Geschirr, können insbesondere Buildersubstanzen, Enzyme, Alkaliträger, oberflächenaktive Tenside, pH-Regulatoren, organische Lösungsmittel und weitere Hilfsstoffe, wie Glaskorrosionsinhibitoren, Silberkorrosionsinhibitoren und Schaumregulatoren enthalten.

Bevorzugte Wasch- und Reinigungsmittel sind pulverförmig und enthalten
i) 15 bis 65 Gew.-%, vorzugsweise 20 bis 60 Gew.-% an wasserlöslicher Builderkomponente,
ii) 5 bis 20 Gew.-%, vorzugsweise 8 bis Gew.-%, an Komponente a),
iii) 0,5 bis 6 Gew.-% an Co-Granulat b), und
iv) 0 bis 50 Gew.-% an weiteren Zusatzstoffen, insbesondere an Enzymen, Alkaliträgern, oberflächenaktiven Tensiden, pH-Regulatoren, organischen Lösungsmitteln oder weiteren Hilfsstoffen, wie Glaskorrosionsinhibitoren, Silberkorrosionsinhibitoren und Schaumregulatoren, jeweils bezogen auf das Gesamtgewicht des Wasch- und Reinigungsmittels.

Ein derartiges Mittel ist insbesondere niederalkalisch, d. h. seine 1-gewichtsprozentige Lösung weist einen pH-Wert im Bereich von 8 bis 11,5 und vorzugsweise von 9 bis 11 auf.

Als wasserlösliche Builderkomponenten in den erfindungsgemäßen Wasch- und Reinigungsmitteln kommen prinzipiell alle in derartigen Mitteln üblicherweise eingesetzten Builder in Frage. Beispiele dafür sind Alkaliphosphate, die in Form ihrer alkalischen, neutralen oder sauren Natrium- oder Kaliumsalze vorliegen können, insbesondere Trinatriumphosphat, Tetranatriumdiphosphat, Dinatriumdihydrogendiphosphat, Pentanatriumtriphosphat, sogenanntes Natriumhexametaphosphat sowie die entsprechenden Kaliumsalze beziehungsweise Gemische aus Natrium- und Kaliumsalzen. Ihre Mengen können im Bereich von 15 bis zu etwa 65 Gew. %, vorzugsweise von 20 bis 60 Gew. %, bezogen auf das gesamte Mittel liegen. Weitere mögliche wasserlösliche Builderkomponenten sind neben Polyphosphonaten und Phosphonatalkylcarboxylaten zum Beispiel organische Polymere nativen oder synthetischen Ursprungs vom Typ der Polycarboxylate, die insbesondere in Hartwasserregionen als Co-Builder wirken. In Betracht kommen beispielsweise Polyacrylsäuren und Copolymere aus Maleinsäureanhydrid und Acrylsäure sowie die Natriumsalze dieser Polymersäuren. Handelsübliche Produkte sind zum Beispiel Sokalan® CP 5, CP 10 und PA 30 der Firma BASF. Zu den als Co-Builder brauchbaren Polymeren nativen Ursprungs gehören beispielsweise oxidierte Stärke und Polyaminosäuren wie Polyglutaminsäure oder Polyasparaginsäure. Weitere mögliche wasserlösliche Builderkomponenten sind natürlich vorkommende Hydroxycarbonsäuren wie zum Beispiel Mono-, Dihydroxybernsteinsäure, alpha-Hydroxypropionsäure und Gluconsäure. Zu den bevorzugten organischen wasserlöslichen Builder-komponenten gehören die Salze der Citronensäure, insbesondere Natriumcitrat. Als Natriumcitrat kommen wasserfreies Trinatriumcitrat und vorzugsweise Trinatriumcitratdihydrat in Betracht. Trinatriumcitratdihydrat kann als fein- oder grobkristallines Pulver eingesetzt werden. In Abhängigkeit vom letztlich in den erfindungsgemäßen Wasch- und Reinigungsmitteln, insbesondere den Mitteln für die Reinigung von Geschirr, eingestellten pH-Wert können auch die zu den genannten Co-Builder-Salzen korrespondierenden Säuren vorliegen. Insbesonders bevorzugte Builderkomponenten in phosphat-freien Formulierungen sind Methylglycindiacetat (MDGA, z. B. Trilon® M, BASF), L-Glutaminsäure, N,N, (biscarboxymethyl)- tertra Natriumsalz(GLDA, Dissolvine® DL, Akzo Nobel), Natrium-Polyaspartate (Baypure®, Lanxess) oder Salze der Iminodibernstaeinsäure (Baypure®, Lanxess).

Zu den in erfindungsgemäßen Wasch- und Reinigungsmitteln gegebenenfalls enthaltenen Enzymen gehören Proteasen, Amylasen, Pullulanasen, Cutinasen und/oder Lipasen, beispielsweise Proteasen wie BLAP™, Optimase™, Opticlean™, Maxacal™, Maxapem™, Durazym™, Purafec™ OxP, EXCELLENZ™ P 1250, EsperaseTM und/oder Savinase™, Amylasen wie Termamyl™, Amylase-LT™, Maxamyl™, Duramyl™ und/oder Lipasen wie Lipolase™, Lipomax™, Lumafast™ und/oder Lipozym™. Die verwendeten Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch- und Reinigungsmitteln üblicherweise in Mengen von 0 bis zu 10 Gew.-% und bevorzugt in Mengen von 0,05 bis 5 Gew.-% enthalten, wobei insbesondere bevorzugt gegen oxidativen Abbau stabilisierte Enzyme eingesetzt werden.

Vorzugsweise enthalten die erfindungsgemäßen Wasch- und Reinigungsmittel die üblichen Alkaliträger wie zum Beispiel Alkalisilikate, Alkalicarbonate und/oder Alkalihydrogencarbonate. Zu den üblicherweise eingesetzten Alkaliträgern zählen Carbonate, Hydrogencarbonate und Alkalisilikate mit einem Molverhältnis SiO₂/M₂O (M = Alkaliatom) von 1 : 1 bis 2,5 : 1. Alkalisilikate können dabei in Mengen von bis zu 40 Gew. %, insbesondere von 3 bis 30 Gew. %, bezogen auf das Gesamtgewicht des Wasch- und Reinigungsmittels, enthalten sein. Das in den erfindungsgemäßen Wasch-und Reinigungsmitteln bevorzugt eingesetzte Alkaliträgersystem ist ein Gemisch aus Carbonat und Hydrogencarbonat, vorzugsweise Natriumcarbonat und Natriumhydrogencarbonat, das in einer Menge von bis zu 50 Gew.-% und vorzugsweise von 5 bis 40 Gew.-% enthalten sein kann.

In einer weiteren bevorzugten Ausführungsform der Erfindung sind in den erfindungsgemäßen Wasch- und Reinigungsmitteln 20 bis 60 Gew.-% wasserlöslicher organischer Builder, insbesondere Alkalicitrat, 3 bis 20 Gew.-% Alkalicarbonat und 3 bis 40 Gew.-% Alkalidisilikat enthalten.

Den erfindungsgemäßen Wasch- und Reinigungsmitteln können gegebenenfalls auch Tenside, insbesondere Aniontenside, zwitterionische Tenside und vorzugsweise schwach schäumende nichtionische Tenside zugesetzt werden, die der besseren Ablösung fetthaltiger Anschmutzungen, als Netzmittel und gegebenenfalls im Rahmen der Herstellung dieser Mittel als Granulierhilfsmittel dienen. Ihre Menge kann bis zu 20 Gew.-%, vorzugsweise bis zu 10 Gew.-% betragen und liegt besonders bevorzugt im Bereich von 0,5 bis 5 Gew.-%, bezogen jeweils auf das Gesamtgewicht des Wasch-und Reinigungsmittels.

Üblicherweise werden extrem schaumarme Verbindungen eingesetzt. Hierzu zählen vorzugsweise C₁₂-C₁₈-Alkylpolyethylenglykolpolypropylenglykolether mit jeweils bis zu 8 Mol Ethylenoxid- und Propylenoxideinheiten im Molekül. Man kann aber auch andere bekannt schaumarme nichtionische Tenside verwenden, wie zum Beispiel C₁₂-C₁₈-Alkylpolyethylenglykolpolybutylenglykolether mit jeweils bis zu 8 Mol Ethylenoxid- und Butylenoxideinheiten im Molekül, endgruppenverschlossene Alkylpolyalkylenglykolmischether sowie die zwar schäumenden, aber ökologisch attraktiven C₈-C₁₄- Alkylpolyglucoside mit einem Polymerisierungsgrad von etwa 1 bis 4 und/oder C₁₂-C₁₄-Alkylpolyethylenglykole mit 3 bis 8 Ethylenoxideinheiten im Molekül. Ebenfalls geeignet sind Tenside aus der Familie der Glucamide wie zum Beispiel Alkyl-N-Methyl-Glucamide, in denen der Alkylteil bevorzugt aus einem Fettalkohol mit der C-Kettenlänge C₆-C₁₄ stammt. Es ist teilweise vorteilhaft, wenn die beschriebenen Tenside als Gemische eingesetzt werden, zum Beispiel die Kombination Alkylpolyglykosid mit Fettalkoholethoxylaten oder Glucamid mit Alkylpolyglykosiden. Auch die Anwesenheit von Aminoxiden, Betainen und ethoxylierten Alkylaminen ist möglich.

Zur Einstellung eines gewünschten, sich durch die Mischung der übrigen Komponenten nicht von selbst ergebenden pH-Werts können die erfindungsgemäßen Wasch- und Reinigungsmittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipin-säure, aber auch Mineralsäuren, insbesondere Schwefelsäure oder Alkalihydrogensulfate, oder Basen, insbesondere Ammonium- oder Alkalihydroxide, enthalten. Derartige pH-Regulatoren sind in den erfindungsgemäßen Wasch- und Reinigungsmitteln vorzugsweise nicht über 10 Gew.-% und besonders bevorzugt von 0,5 bis 6 Gew.-%, enthalten, bezogen jeweils auf das Gesamtgewicht des Mittels.

Zu den in den erfindungsgemäßen Wasch- und Reinigungsmitteln verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Wasch- und Reinigungsmitteln vorzugsweise in einer Menge nicht über 20 Gew.-% und besonders bevorzugt von 1 bis 15 Gew.-% vorhanden.

Sofern die erfindungsgemäßen Wasch- und Reinigungsmittel zum Beispiel bei Anwesenheit von Aniontensiden bei der Anwendung zu stark schäumen, können ihnen noch bis zu 6 Gew.-%, vorzugsweise etwa 0,5 bis 4 Gew.-% einer schaumunterdrückenden Verbindung, vorzugsweise aus der Gruppe der Silikonöle, Gemische aus Silikonöl und hydrophobierter Kieselsäure, Paraffine, Paraffin-Alkohol-Kombinationen, hydrophobierter Kieselsäure, der Bisfettsäureamide, und sonstiger weiterer bekannter im Handel erhältliche Entschäumer zugesetzt werden.

Die erfindungsgemäßen Wasch- und Reinigungsmittel können als weitere Inhaltsstoffe beispielsweise aus dem Stand der Technik für derartige Mittel bekannte Sequestrierungsmittel, Elektrolyte, zusätzliche Persauerstoff-Aktivatoren, Farbstoffe oder Duftstoffe, wie z. B. Parfümöle, enthalten.

Die Herstellung der erfindungsgemäßen festen oder pulverförmigen Wasch- und Reinigungsmittel bietet keine Schwierigkeiten und kann im Prinzip in bekannter Weise, zum Beispiel durch Sprühtrocknung oder Granulation, erfolgen, wobei Persauerstoffverbindung a) und Co-Granulat b) gegebenenfalls später getrennt zugesetzt werden.

Erfindungsgemäße Wasch- und Reinigungsmittel in Form wässriger oder sonstige übliche Lösungsmittel enthaltender Lösungen können besonders vorteilhaft durch einfaches Mischen der Inhaltsstoffe, die in Substanz oder als Lösung in einen automatischen Mischer gegeben werden können, hergestellt werden.

Die erfindungsgemäßen Wasch- und Reinigungsmittel liegen vorzugsweise als pulverförmige, granulare oder tablettenförmige Präparate vor, die in an sich bekannter Weise, beispielsweise durch Mischen, Granulieren, Walzenkompaktieren und/oder durch Sprühtrocknung von thermisch belastbaren Komponenten und Zumischen der empfindlicheren Komponenten, zu denen insbesondere Enzyme, Bleichmittel und der Bleichkatalysator zu rechnen sind, hergestellt werden können.

Zur Herstellung von erfindungsgemäßen Wasch- und Reinigungsmitteln in Tablettenform geht man vorzugsweise derart vor, dass man alle Bestandteile in einem Mischer miteinander vermischt und das Gemisch mittels herkömmlicher Tablettenpressen, beispielsweise Exzenterpressen oder Rundläuferpressen, mit Pressdrucken im Bereich von 200 . 10⁵ Pa bis 1500 · 10° Pa verpresst.

Man erhält so problemlos bruchfeste und dennoch unter den bestimmungsgemäßen Einsatzbedingungen ausreichend schnell lösliche Tabletten mit Biegefestigkeiten von normalerweise über 150 N. Vorzugsweise weist eine derart hergestellte Tablette ein Gewicht von 15 bis 40 g, insbesondere von 20 bis 30 g auf, bei einem Durchmesser von 35 bis 40 mm.

Die Herstellung erfindungsgemäßer Wasch- und Reinigungsmittel in Form von nicht staubenden, lagerstabil rieselfähigen Pulvern und/oder Granulaten mit hohen Schüttdichten im Bereich von 800 bis 1.000 g/I kann dadurch erfolgen, dass man in einer ersten Verfahrensteilstufe die Builder-Komponenten mit wenigstens einem Anteil flüssiger Mischungskomponenten unter Erhöhung der Schüttdichte dieses Vorgemisches vermischt und nachfolgend - gewünschtenfalls nach einer Zwischentrocknung - die weiteren Bestandteile des Mittels, darunter Persauerstoffverbindung a) und Co-Granulat b), mit dem so gewonnenen Vorgemisch vereinigt.

Erfindungsgemäße Wasch- und Reinigungsmittel können sowohl für die Handwäsche als auch in Haushaltswaschmaschinen sowie in gewerblichen Waschmaschinen eingesetzt werden. Die Zugabe kann von Hand oder mittels geeigneter Dosiervorrichtungen erfolgen. Die Anwendungskonzentrationen in der Reinigungsflotte betragen in der Regel etwa 1 bis 8 g/l, vorzugsweise 2 bis 5 g/l.

Die Erfindung betrifft auch ein Verfahren zum Waschen von Textilien oder zum Reinigen von Oberflächen, bei dem man auf die Textilien oder die Oberflächen eine Waschlauge einwirken lässt, die durch Einbringen eines Wasch- und Reinigungsmittels enthaltend die oben beschriebenen Komponenten a) und b) in Wasser hergestellt worden ist.

Erfindungsgemäße Wasch- und Reinigungsmittel enthaltend die Komponenten a) und b) lassen sich vorteilhafterweise bei tiefen Temperaturen einsetzen und zeigen bei Temperaturen von weniger als 35 °C, vorzugsweise von weniger als 30 °C und ganz besonders bevorzugt von weniger als 25 °C hervorragende Wasch- und Reinigungsergebnisse. Außerdem zeigen diese Wasch- und Reinigungsmittel auch bei tiefen Temperaturen eine ausgezeichnete keimabtötende Wirkung. Die Anzahl von Bakterien und Hefen auf den damit behandelten Substraten wird durch diese Mittel deutlich verringert.

Bevorzugt wird dabei ein Verfahren, bei dem die wässrige Lösung bei Temperaturen von weniger als 30 °C auf die Textilien oder die Oberflächen einwirken gelassen wird.

Ferner betrifft die Erfindung die Verwendung eines Wasch- oder Reinigungsmittels enthaltend die oben beschriebenen Komponenten a) und b) zum Desinfizieren von Textilen oder von Oberflächen.

Schließlich betrifft die Erfindung die Verwendung des oben beschriebenen Wasch- oder Reinigungsmittels zum Waschen von Textilen oder zum Reinigen von Oberflächen bei Temperaturen von weniger als 30 °C.

### Beispiele

In den folgenden Beispielen bedeuten %-Angaben Gewichtsprozent (Gew. %), sofern nicht explizit etwas anderes angegeben ist.

### Beispiele 1 und V1 bis V2: Herstellung von Co-Granulaten

In einem Intensivmischer der Fa. Eirich, Hardheim, wurden die einzelnen Bestandteile der Zusammensetzungen miteinander vermischt und mithilfe von Wasser nassgranuliert. Die Carboxymethylcellulose quillt durch Zugabe von Wasser auf und adsorbiert die übrigen Bestandteile. Nach der Trocknung kommt es zur Bildung einer Feststoffbrücke und somit zur ausreichenden Festigkeit des Co-Granulats. Mengen und Bestandteile der Zusammensetzungen der einzelnen Beispiele sind in der nachfolgenden Tabelle 1 angegeben.

**Tabelle 1: Zusammensetzung der Co-Granulate der Beispiele 1 und V1**

| Beispiel Nr. | 1 | V1 |
|---|---|---|
| 3-Methyl-1,2-benzisothiazol-1,1-dioxid (Gew.-%) | 33,3 | 33,3 |
| TAED (Gew.-%) | 60,3 | 60,3 |
| Carboxymethylcellulose (%)¹⁾ | 6,4 | - |
| mikrokristalline Zellulose (Gew.-%)²⁾ | - | 6,4 |

| | | |
|---|---|---|
| ¹⁾ FinnFix BD ²⁾ Vivapur 200 | | |

Aus der Formulierung des Beispiels 1 konnten durch Nassgranulierung Co-Granulate hergestellt werden.

Aus der Formulierung des Beispiels V1 konnten durch Nassgranulierung keine stabilen Co-Granulate hergestellt werden. Die Co-Granulate waren nicht stabil, sondern fielen auseinander.

Die gemäß Beispiel 1 erzeugten Co-Granulate wurden anschließend in einer Wirbelschicht-Beschichtungsvorrichtung der Fa. Glatt mit einem Überzug versehen.

Das Co-Granulat gemäß Beispiel 2 erhielt einen Überzug aus 10 Gew.-% Hydroxymethylcellulose (Tylose® MH 50 G4).

Die Zusammensetzung des umhüllten Co-Granulats des Beispiels 2 betrug 54,3 Gew. % TAED, 5,7 Gew. % Carboxymethylcellulose, 30 Gew.-% 3-Methyl-1,2-benzisothiazol-1,1-dioxid und 10 Gew. % Hydroxymethylcellulose.

Das Co-Granulat gemäß Beispiel V2 erhielt einen Überzug aus 10 Gew-% an Polyvinylalkohol (Poval® 6-88 von Kuraray). Die Zusammensetzung des umhüllten Co-Granulats des Beispiels V2 betrug 54,3 Gew. % TAED, 5,7 Gew. % Carboxymethylcellulose, 30 Gew.-% 3-Methyl-1,2-benzisothiazol-1,1-dioxid und 10 Gew. % Polyvinylalkohol.

### Anwendungsbeispiele - Lagertests

Zur Überprüfung der chemischen und physikalischen Stabilität der beschichteten Co-Granulate nach Beispielen 2 und V2 wurde deren Lagerverhalten in einer handelsüblichen Vanish®-Formulierung aus Deutschland untersucht. Hierzu wurden 0,5 Gew.-% dieser Co-Granulate in die Vanish®-Pulvermischung eingearbeitet. Die Mischung wurde in eine Glasflasche überführt und mit geschlossenem Deckel bei 40°C 3 Monate lang gelagert. Danach wurde visuell beurteilt, ob das Co-Granulat sich gelb verfärbt hatte.

Das Co-Granulat des Beispiels 2 mit Hydroxymethylcellulose als Überzug hatte sich während der Lagerung nicht verändert und zeigte keine Gelbfärbung.

Das Co-Granulat des Beispiels V2 mit Polyvinylalkohol als Überzug hatte sich während der Lagerung verändert und zeigte eine deutliche Gelbfärbung.

### Anwendungsbeispiele - Waschtests

Vor und nach der Lagerung wurden mit den oben beschriebenen Vanish®-Pulvermischungen Lini-Tests auf BC-1 Teeverfärbung bei 40°C Waschtemperatur durchgeführt. Es wurden 200ml Becher befüllt mit 1 Stoffläppchen BC-1 von CFT B.V. (Center for Test Materials), das mit Tee angeschmutzt ist. Danach wurden 150ml Wasser mit einer Wasserhärte von 15dH und 1,044g der Pulvermischung dazugegeben. Die Becher wurden nach dem Verschließen 30min im Wasserbad bei 40°C geschüttelt. Nach dem Trockenen wurden die Stofflappen mit dem Reflektometer von Elephro vermessen. Es wurde die Differenz der Reflexion bei λ=457 nm der ungewaschenen Probe und der gewaschenen Probe angegeben als ΔR.

Die Bleichleistung der Pulvermischung enthaltend das Co-Granulat des Beispiels 2 war vor und nach der Lagerung gleich gut.
Frisch angesetzte Probe ΔR = 19
Probe 3 Monate bei 40°C gelagert Δ R = 18

### Anwendungsbeispiele - Hygienetests

Zur Überprüfung der antimikrobiellen Wirkung wurden verschiedene Waschpulverformulierungen untersucht. Hierzu wurden 10 Gew.-% Natriumpercarbonat und gegebenenfalls weitere Zusätze in IEC-A Basiswaschpulver eingearbeitet. Die Zusammensetzung der einzelnen Waschpulverformulierungen sind in der nachfolgenden Tabelle 2 angegeben.

**Tabelle 2: Waschpulver-Formulierungen**

| Beispiel Nr. | IEC-Basiswaschpulver (Gew.-%) | Natrium-Percarbonat (Gew. %) | TAED (Gew.-%) | 3-Methyl-1,2-benzisothiazol-1,1-dioxid (Gew.-%) | Natriumsulfat (Gew.-%) |
|---|---|---|---|---|---|
| V3 | 77 | 10 | - | - | 13 |
| V4 | 77 | 10 | 3 | - | 10 |
| 3 | 77 | 10 | 3 | 0,3 | 9,7 |
| 4 | 77 | 10 | 0,5 | 0,3 | 12,2 |

Mit diesen Formulierungen wurden quantitative Suspensionstest gemäß DIN EN 1040 (Bakterien) und DIN EN 1275 (Pilze) durchgeführt. Die Einwirkungsdauer betrug 15 Minuten bei jeweils 20°C. Die Ergebnisse sind in der nachfolgenden Tabelle 3 angegeben.

| Organismus | Waschpulver nach Beispiel V3 | Waschpulver nach Beispiel V4 | Waschpulver nach Beispiel 3 | Waschpulver nach Beispiel 4 |
|---|---|---|---|---|
| Escherichia coli ATCC 8739 | < 1,34 | > 5,72 | > 5,72 | > 5,72 |
| Enterococcus faecalis ATCC 19433 | > 5,20 | > 5,20 | > 5,20 | > 5,20 |
| Staphylococcus aureus ATCC 6538 | 2,21 | 2,67 | > 5,24 | > 5,24 |
| Pseudomonoas aeroginosa ATCC 15442 | < 0,75 | > 5,12 | > 5,12 | > 5,12 |
| Candida albicans ATCC 10231 | 0,09 | 0,10 | 0,62 | 0,18 |
| Trichophyton rubrum DSM 19240 | 0,52 | 0,67 | > 4,04 | 2,35 |

Das cyclische Sulfonimin benötigt TAED und Percarbonat, um über Peressigsäure aktiviert zu werden. Wenn kein oder zu wenig TAED mitgeliefert wird, kann das cyclische Sulfonimin nicht aktiviert werden und bei 20°C Bleicheffekte bewirken und mikrobiologisch wirksam sein.

Wenn aus Percarbonat und TAED die Peressigsäure gebildet wird (Beispiel V4), dann werden bei 20°C Escheria coli, Enterococcus feacalis und Pseudomonas aeruginosa abgetötet. Wenn zu diesem Waschpulver noch cyclisches Sulfonimin (Beispiele 3 und 4) dazugegeben wird, dann werden zusätzlich noch Staphylococcus aureus und Trichophyton rubrum abgetötet. Damit zeigt sich, dass das aktivierte cyclische Sulfonimin auch in der Lage ist, zusätzlich zur verstärkten Bildung von Peressigsäure Mikroben bei 20°C abzutöten.

## Patentansprüche

1. Mit Celluloseether beschichtetes Co-Granulat enthaltend
b1) cyclisches Sulfonimin,
b2) Bleichaktivator ausgewählt aus der Gruppe bestehend aus Tetraacetylethylendiamin, Decanoyloxybenzoesäure oder Mischungen davon, und
b3) Celluloseether als Bindemittel.

2. Co-Granulat nach Anspruch 1, **dadurch gekennzeichnet, dass** als Bleichaktivator b2) Tetraacetylethylendiamin eingesetzt wird.

3. Co-Granulat nach mindestens einem der Ansprüche 1 bis 2, **dadurch gekennzeichnet, dass** das cyclische Sulfonimin b1) eine Verbindung der Formel I ist 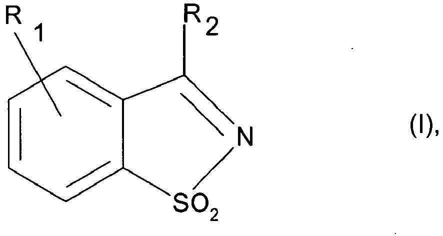 worin R₁ und R₂ unabhängig voneinander Wasserstoff, C₁-C₆-Alkyl oder Phenyl sind.

4. Co-Granulat nach Anspruch 3, **dadurch gekennzeichnet, dass** R₁ Wasserstoff ist und R₂ C₁-C₆-Alkyl oder Phenyl bedeutet.

5. Co-Granulat nach mindestens einem der Ansprüche 1 bis 4, **dadurch gekennzeichnet, dass** das Bindemittel b3) eine Carboxymethylcellulose ist.

6. Co-Granulat nach mindestens einem der Ansprüche 1 bis 5, **dadurch gekennzeichnet, dass** das Cogranulat mit Methylcellulose beschichtet ist.

7. Wasch- und Reinigungsmittel enthaltend
a) Bleichmittel ausgewählt aus der Gruppe bestehend aus Perborat, Percarbonat oder Mischungen davon, und
b) mit Celluloseether beschichtetes Co-Granulat nach mindestens einem der Ansprüche 1 bis 6.

8. Wasch- und Reinigungsmittel nach Anspruch 7, **dadurch gekennzeichnet, dass** das Bleichmittel a) Natriumpercarbonat ist.

9. Wasch- und Reinigungsmittel nach mindestens einem der Ansprüche 7 bis 8, **dadurch gekennzeichnet, dass** dieses als pulver- oder tablettenförmiger Feststoff, insbesondere als Pulver vorliegt.

10. Verfahren zum Waschen von Textilien oder zum Reinigen von Oberflächen, **dadurch gekennzeichnet, dass** man auf die Textilien oder die Oberflächen eine Waschlauge einwirken lässt, die durch Einbringen des Wasch- und Reinigungsmittels nach einem der Ansprüche 7 bis 9 in Wasser hergestellt worden ist.

11. Verfahren nach Anspruch 10, **dadurch gekennzeichnet, dass** die wässrige Lösung bei Temperaturen von weniger als 30 °C auf die Textilien oder die Oberflächen einwirken gelassen wird.

12. Verwendung eines Wasch- oder Reinigungsmittels gemäß mindestens einem der Ansprüche 7 bis 9 zum Desinfizieren von Textilen oder von Oberflächen.

13. Verwendung eines Wasch- oder Reinigungsmittels nach mindestens einem der Ansprüche 7 bis 9 zum Waschen von Textilen oder zum Reinigen von Oberflächen bei Temperaturen von weniger als 30 °C.
